# EUROPÄISCHE PATENTSCHRIFT

(11) **EP 0 953 403 B1**
(45) Veröffentlichungstag und Bekanntmachung des Hinweises auf die Patenterteilung: **11.09.2002**
(21) Anmeldenummer: 98122810.9
(22) Anmeldetag: 01.12.1998
(51) Int. Cl.: B23Q 1/01, B23Q 1/26, B23Q 1/62, B23Q 7/00, B23Q 1/56, B23Q 39/02, B23Q 11/00

(54) **Werkzeugmaschine**
Machine tool
Machine-outil

(30) Priorität: 27.04.1998 DE 19818663; 08.06.1998 DE 19825523
(43) Veröffentlichungstag der Anmeldung: 03.11.1999
(73) Patentinhaber: ILG GmbH, 71554 Weissach i.T. (DE)
(72) Erfinder: Ilg, Herbert, 71554 Weissach i. T. (DE)
(74) Vertreter: Thul, Stephan

(56) Entgegenhaltungen:
- EP-A- 0 426 977
- EP-A- 0 816 012
- DE-A- 2 918 251
- DE-A- 3 721 610
- DE-A- 3 803 219
- DE-A- 3 824 602
- DE-A- 4 229 423
- GB-A- 2 136 333
- US-A- 4 013 176
- US-A- 4 484 387
- US-A- 4 510 668
- PATENT ABSTRACTS OF JAPAN vol. 017, no. 395 (M-1451), 23. Juli 1993 (1993-07-23) & JP 05 077124 A (AMADA CO LTD), 30. März 1993 (1993-03-30)

## Beschreibung

Die vorliegende Erfindung betrifft eine Werkzeugmaschine zur Bearbeitung von Werkstücken mit einem Maschinengestell, gemäss dem Oberbegriff des Anspruchs 1 (siehe, z.B., US-4,484,387-A).

Derartige Werkzeugmaschinen sind in unterschiedlichen Versionen, beispielsweise als Drehbearbeitungsmaschinen für Futterteile bekannt. Der Werkstückhalter ist hierbei als Spindeleinheit mit vertikaler Drehachse ausgebildet. Die Spindeleinheit ist horizontal und vertikal hin- und herbeweglich am Maschinengestell angeordnet, um den für die Bearbeitung des Werkstückes erforderlichen Vorschub zu ermöglichen. Außerdem kann die Spindeleinheit dadurch zwischen einer Werkstückaufnahmeposition und einer Werkstückablageposition verfahrbar sein.

Diese bekannten Werkzeugmaschinen weisen einen erheblichen Platzbedarf auf. Außerdem können sie in der Regel zwar miteinander verkettet werden; der Platzbedarf steigt dabei aber noch zusätzlich dadurch, daß die Maschinen nur mit einem erheblichen Abstand voneinander aufgestellt werden können.

Der Erfindung liegt die Aufgabe zugrunde, eine Werkzeugmaschine der eingangs genannten Art so weiterzubilden, daß deren Platzbedarf verringert ist. Auch soll eine Verkettung der Maschinen ohne das Erfordernis eines Zwischenraumes zwischen benachbarten Maschinen ermöglicht werden.

Diese Aufgabe wird durch die kennzeichnenden Merkmale des Anspruchs 1 gelöst.

Erfindungsgemäß ist also vorgesehen, anstelle einer Hin- und Herbeweglichkeit der Spindeleinheit in zwei zueinander senkrechten Richtungen die Spindeleinheit nur in einer Richtung hin- und herbeweglich auszugestalten und statt dessen die Bearbeitungseinheit in einer hierzu senkrechten Richtung hin- und herbeweglich am Maschinengestell anzuordnen. Durch diese Konstruktion ist eine sehr platzsparende Bauweise der Werkzeugmaschine möglich. Insbesondere wird das bei bekannten Maschinen erforderliche ausladende Portal entbehrlich, mittels dem die Spindeleinheit dort quer zum Maschinengestell hin- und herbeweglich angeordnet wird. Erfindungsgemäß muß die Spindeleinheit dagegen nur in einer Richtung längs des Maschinengestells beweglich sein, was durch eine einfache Schienenlagerung am Maschinengestell bewerkstelligt werden kann.

Insbesondere kann die Spindeleinheit nach einer Ausgestaltung der Erfindung an der als vertikale Ebene ausgebildeten Vorderwand des Maschinengestells angebracht sein, während die Bearbeitungseineheit, bevorzugt mittig zur Bewegungsachse des Werkstückhalters, senkrecht zur Vorderwand des Maschinengestells hin- und herbeweglich gelagert ist. Die Werkzeugmaschine kann dadurch mit einer sehr geringen Ausladung zur Vorderseite des Maschinengestells ausgebildet werden. Eine herkömmliche Drehbearbeitungsmaschine kann so auf eine Fläche von ca. 2 m² ohne Zusatzaggregate reduziert werden.

Der Werkstückhalter ist beispielsweise als Spindeleinheit mit einer vertikalen Spindelachse ausgebildet, kann aber auch nicht rotierend ausgebildet sein und mit rotierenden Werkzeugen zusammenarbeiten.

Nach einer weiteren Ausgestaltung der Erfindung schliessen die beiden Aussenwände unmittelbar aneinander an.

Durch die Ausbildung des Maschinengestells als Monoblock wird eine kostengünstige Herstellung bei hoher Fertigungsgenauigkeit erreicht. An zwei Seiten des Monoblocks können mit hoher Maßgenauigkeit Planflächen für die hin- und herbewegliche Führung der Bearbeitungseinheit und des Werkstückhalters erzeugt werden. Auf diesen Planflächen können dann Führungsschienen für die Bearbeitungseinheit und den Werkstückhalter angebracht werden, längs welchen beide derart gegeneinander beweglich sind, daß die Bearbeitungseinheit und das Werkstück zur Bearbeitung miteinander in Eingriff gebracht und gegeneinander bewegt werden können. Die beiden Seiten können dabei entweder unmittelbar aneinander anschließen, oder es können zwischen diesen Absätze oder Ausnehmungen vorgesehen sein.

Nach einer weiteren Ausgestaltung der Erfindung ist der Werkstückhalter längs einer vertikalen Achse und die Bearbeitungseinheit längs einer horizontalen Achse beweglich. Der Werstückhalter ist dabei insbesondere an der Vorderwand des Monoblocks angeordnet, die Bearbeitungseinheit an der unteren Wand des Monoblocks. Eine derartige Anordnung ist insbesondere zur Drehbearbeitung von Werkstücken unter Verwendung einer Spindeleinheit vorteilhaft. Insbesondere können hiermit Futterteile in vorteilhafter Weise drehbearbeitet werden. Aber auch eine Wälzfräseinheit kann in dieser Anordnung aufgebaut werden.

Nach einer weiteren Ausgestaltung der Erfindung ist die Bearbeitungseinheit als Werkzeugrevolver ausgebildet. Ebenso kann die Bearbeitungseinheit als Wälzfräseinrichtung, als Entgrat- oder Anfasmaschine oder als Induktivhärtemaschine ausgebildet sein. In allen genannten Anwendungsfällen kann die Werkzeugmaschine denselben Grundaufbau mit in einer ersten Richtung hin- und herbeweglichem Werkstückhalter und einer in einer hierzu senkrechten Richtung hin- und herbeweglichen Bearbeitungseinheit aufweisen. Stets ergibt sich eine platzsparende Konstruktion, die zudem von der Vorderseite der Werkzeugmaschine her sehr gut zugänglich ist. Die Werkzeugmaschine kann dadurch unmittelbar von Hand oder halbautomatisch bestückt werden.

Nach einer weiteren Ausgestaltung der Erfindung sind zusätzlich zur hinund herbeweglichen Bearbeitungseinheit weitere Bearbeitungswerkzeuge vorgesehen. Beispielsweise kann zusätzlich ein seitlich zur Spindeleinheit angeordneter, in X-Richtung hin- und herbeweglicher Bohrrevolver vorgesehen sein. Der Bohrrevolver kann dabei bevorzugt auch in Y-Richtung hin- und herbeweglich sein, um den für die Bearbeitung notwendigen Vorschub zu bewirken. Alternativ kann die Spindeleinheit zusätzlich in Y-Richtung beweglich am Maschinengestell angeordnet sein. Eine solche Beweglichkeit der Spindeleinheit kann auch in anderen Fällen vorteilhaft sein. Mit dem zusätzlichen Bearbeitungswerkzeug werden die Bearbeitungsmöglichkeiten durch die erfindungsgemäße Werkzeugmaschine erhöht, ohne daß sich dies wesentlich auf den Platzbedarf auswirkt. Das Erfordernis einer weiteren Bearbeitungsmaschine entfällt.

Die erfindungsgemäße Werkzeugmaschine kann zudem Mittel zum Abtransport von bei der Bearbeitung anfallenden Spänen, insbesondere an der Rückseite des Maschinengestells, aufweisen. Ebenso können Kühlmittelbehälter oder Hydraulikölbehälter bevorzugt an der Rückseite des Maschinengestells vorgesehen sein. Dadurch werden Vorderseite und Seiten der Maschine frei gehalten, so daß der Zugriff auf die Maschine erleichtert ist und mehrere Maschinen direkt aneinander anschließend aufgestellt werden können, um eine verkettete Bearbeitung durchzuführen.

Für eine Anordnung von zwei erfindungsgemäßen Werkzeugmaschinen ist vorgesehen, die zur Steuerung notwendigen Schaltschränke bevorzugt an zwei voneinander abgewandten Seiten der beiden Werkzeugmaschinen anzuordnen. Für eine Verkettung von mehreren erfindungsgemäßen Werkzeugmaschinen werden die Schaltschränke dagegen bevorzugt jeweils auf der Rückseite der Werkzeugmaschinen angeordnet.

Das Unterteil des Maschinengestells ist bevorzugt als separates Untergestell ausgebildet. Das separate Untergestell ermöglicht eine Aufstellung der Werkzeugmaschine ohne Fundament. Des weiteren sind der Werstückhalter und/oder die Bearbeitungseinheit der erfindungsgemäßen Werkzeugmaschine bevorzugt thermosymmetrisch am Monoblock angeordnet. Die beiden Einheiten sind insbesondere mittig an dem symmetrisch ausgebildeten Monoblock vorgesehen. Ein Einfluß der Wärmeausdehnung auf die Achsstellung zueinander kann dadurch vermindert werden.

Nach einer weiteren Ausgestaltung der Erfindung ist an der Vorderseite der Werkzeugmaschine ein Dreharm mit mindestens einer Werkstückaufnahme vorgesehen. Der Dreharm ermöglicht eine halbautomatische Bestückung der Werkzeugmaschine. Insbesondere kann der Dreharm an seinen beiden voneinander abgewandten Enden jeweils eine Werkstückaufnahme aufweisen, so daß jeweils ein Werkstück von der Werkstückaufnahme der Werkzeugmaschine aufgenommen werden kann, während ein bereits bearbeitetes Werkstück entnommen und ein weiteres Werkstück zur nachfolgenden Bearbeitung in den Dreharm eingesetzt wird.

Ausführungsbeispiele der Erfindung sind in der Zeichnung dargestellt und werden nachfolgend beschrieben wobei die Figuren 3 bis 6 der Erfindung nicht entsprechen, aber zusätzliche Einzelmerkmale zeigen. Es zeigen, jeweils in schematischer Darstellung,
- Fig. 1: eine Vorderansicht einer ersten als Drehbearbeitungsmaschine ausgebildeten Variante der erfindungsgemäßen Werkzeugmaschine,
- Fig. 2: eine Seitenansicht der Werkzeugmaschine von Fig. 1,
- Fig. 3: eine Vorderansicht einer als Drehbearbeitungsmaschine ausgebildeten Werkzeugmaschine,
- Fig. 4: eine Draufsicht auf die Oberseite der Werkzeugmaschine von Fig. 3,
- Fig. 5: eine Vorderansicht einer als Wälzfräsmaschine ausgebildeten Werkzeugmaschine,
- Fig. 6: eine Draufsicht auf die Oberseite der Werkzeugmaschine von Fig. 5,
- Fig. 7: eine Vorderansicht einer zweiten als Drehbearbeitungsmaschine ausgebildeten Variante der erfindungsgemäßen Werkzeugmaschine,
- Fig. 8: eine Vorderansicht einer dritten als Wälzfräsmaschine ausgebildeten Variante der erfindungsgemäßen Werkzeugmaschine und
- Fig. 9: eine Seitenansicht der Werkzeugmaschine von Fig. 8.

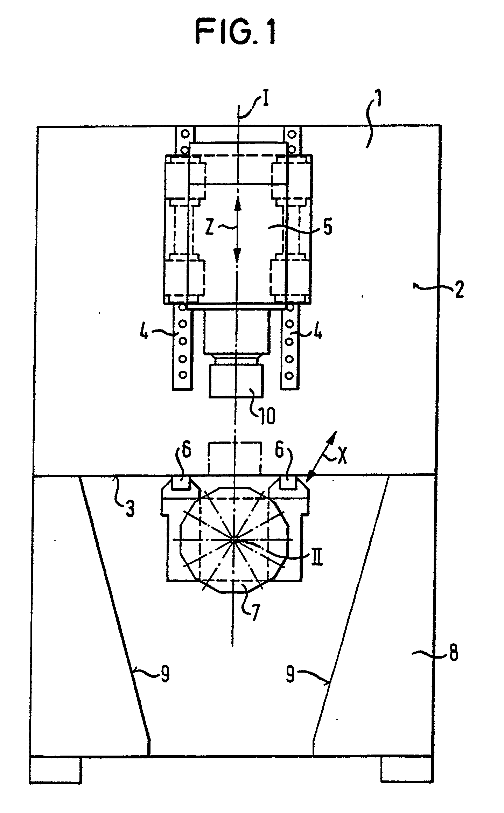

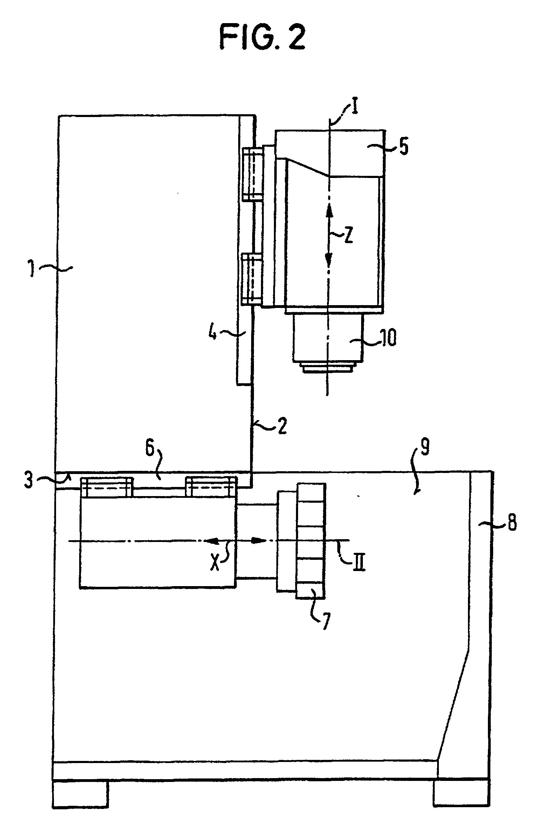

Die in den Fig. 1 und 2 dargestellte Werkzeugmaschine umfaßt ein als Monoblock 1 ausgebildetes, quaderförmiges Maschinengestell mit einer vertikal verlaufenden Vorderwand 2 und einer horizontal verlaufenden unteren Wand 3. An der Vorderwand 2 des Monoblocks 1 sind vertikale Schienen 4 angeordnet, auf welchen eine Spindeleinheit 5 mit vertikaler Spindelachse I verschiebbar geführt ist. Die Spindeleinheit 5 ist dadurch in Z-Richtung hin und her verschiebbar.

An der unteren Wand 3 des Monoblocks 1 sind ebenfalls Schienen 6 angeordnet, die unter einem rechten Winkel zu den Schienen 4 an der Vorderwand 2 des Monoblocks 1 und mit diesen fluchtend verlaufen. Auf den Schienen 6 ist ein Werkzeugrevolver 7 verschiebbar geführt, der dadurch in X-Richtung hin und her beweglich ist. Der Werkzeugrevolver 7 ist um eine Achse II drehbar, um ein Werkzeug zur Bearbeitung auszuwählen. Ein in der Spindeleinheit 5 gehaltenes Werkstück kann so mit einem Werkzeug des Werkzeugrevolvers 7 zur Drehbearbeitung in Eingriff gebracht werden.

Der Monoblock 1 wird von einem Untergestell 8 abgestützt, welches als separates Bauteil ausgebildet ist. Das Untergestell 8 weist zwei schräge Seitenwände 9 zur Späneführung auf und kann an der Rückseite mit einem Durchbruch versehen sein, durch welchen die so gesammelten Späne mittels einer Transportvorrichtung abführbar sind.

Die Spindeleinheit 5 umfaßt eine Aufnahme 10 für ein zu bearbeitendes Werkstück. Durch Verschieben der Spindeleinheit 5 wird ein eingesetztes Werkstück mit einem gewünschten Werkzeug des Werkzeugrevolvers 7 in Eingriff gebracht und durch Rotation der Spindeleinheit 5 um die Spindelachse I drehbearbeitet. Der nötige Vorschub des Werkstückes wird einerseits durch Verfahren der Spindeleinheit 5 in Z-Richtung und andererseits durch Verfahren des Werkzeugrevolvers 7 in X-Richtung bewerkstelligt. Damit können alle üblichen Drehbearbeitungen von Futterteilen ausgeführt werden.

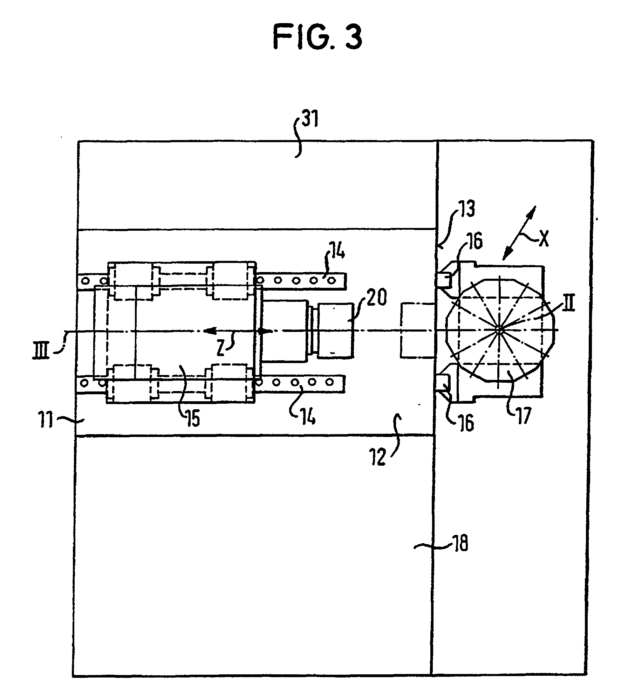

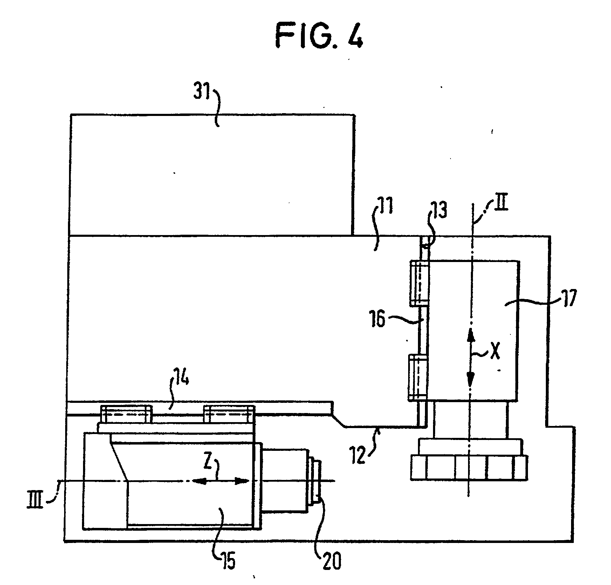

Die in den Fig. 3 und 4 dargestellte Werkzeugmaschine umfaßt ebenfalls ein als Monoblock 11 ausgebildetes, quaderförmiges Maschinengestell mit einer vertikalen Vorderwand 12. Eine weitere vertikale Wand 13 bildet eine Seitenwand des Monoblocks 11, verläuft also senkrecht zur Vorderwand 12. An der Vorderwand 12 des Monoblocks 11 sind horizontal verlaufende Schienen 14 vorgesehen, auf welchen eine Spindeleinheit 15 mit horizontaler Spindelachse III verschiebbar geführt ist. Die Z-Achse der Spindeleinheit 15 verläuft hier also horizontal. An der Seitenwand 13 des Monoblocks 11 sind ebenfalls horizontal verlaufende Schienen 16 angeordnet, auf welchen nun der Werkzeugrevolver 17 verschiebbar geführt ist. Der Werkzeugrevolver 17 ist dadurch in X-Richtung hin und her beweglich. Die Schienen 14 und die Schienen 16 sind miteinander fluchtend angeordnet, so daß ein von der Spindeleinheit 15 gehaltenes Werkstück mit dem Werkzeugrevolver 17 zur Bearbeitung in Eingriff bringbar ist. Der Monoblock 11 ist auch hier auf einem Untergestell 18 angeordnet. Die in den Fig. 3 und 4 dargestellte Werkzeugmaschine kann für dieselben Drehbearbeitungen eingesetzt werden wie die zuvor beschriebene Werkzeugmaschine gemäß Fig. 1 und 2.

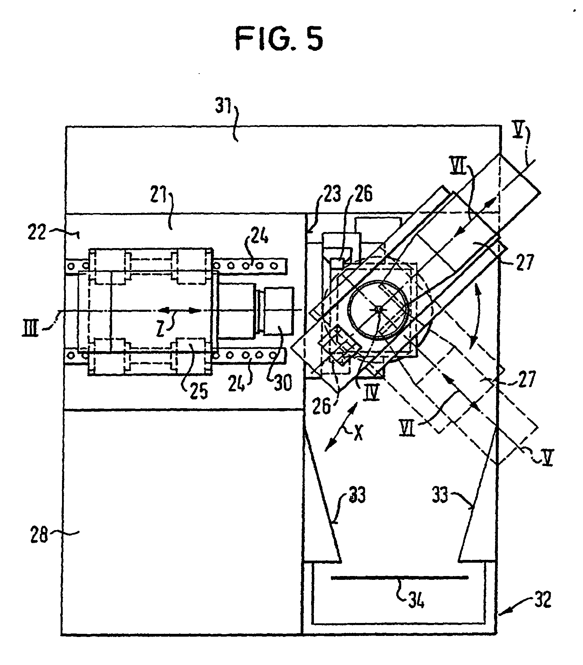

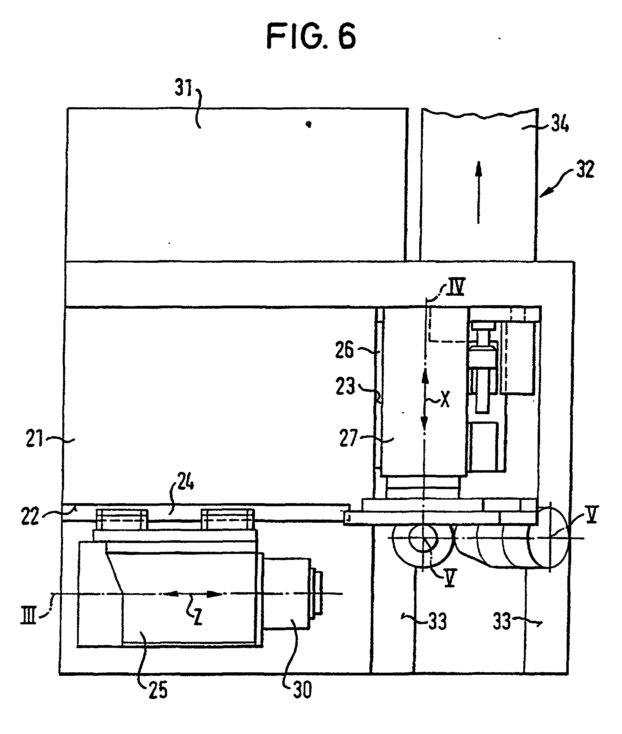

Auch die in den Figuren 5 und 6 dargestellte Werkzeugmaschine umfaßt ein als Monoblock 21 ausgebildetes, quaderförmiges Maschinengestell, welches eine vertikale Vorderwand 22 und eine hierzu senkrechte vertikale Seitenwand 23 aufweist. An der Vorderwand 22 des Monoblocks 21 sind wie zuvor horizontal verlaufende Schienen 24 vorgesehen, auf welchen eine Spindeleinheit 25 mit horizontaler Spindelachse III verschiebbar geführt ist. Die Z-Achse der Spindeleinheit 25 verläuft also auch hier horizontal.

An der Seitenwand 23 des Monoblocks 21 ist nun aber eine Wälzfräseinheit 27 auf horizontal verlaufenden Schienen 26 verschiebbar geführt. Die Wälzfräseinheit ist dadurch in X-Richtung hin- und herbeweglich. Die Schienen 24 und die Schienen 26 sind miteinander fluchtend angeordnet, so daß ein von der Spindeleinheit 25 gehaltenes Werkstück mit der Wälzfräseinheit 27 zur Bearbeitung in Eingriff bringbar ist. Die Wälzfräseinheit 27 weist die üblichen Einstellmöglichkeiten und Achsen IV, V und VI auf. Die in den Fig. 5 und 6 dargestellte Werkzeugmaschine kann also zum Wälzfräsen von Zahnrädern oder zum Schlagwälzfräsen von konischen Verzahnungen eingesetzt werden.

Der Monoblock 21 ist wiederum auf einem Untergestell 28 angeordnet. Seitlich des Untergestells 28 und unterhalb der Wälzfräseinheit 27 ist eine Einrichtung 32 zum Sammeln und Abtransportieren von Spänen vorgesehen. Die Einrichtung 32 umfaßt Führungswände 33 und ein Förderband 34. Der Abtransport der Späne ist auf diese Weise besonders einfach und günstig.

Die Beladung der erfindungsgemäßen Werkzeugmaschinen kann von Hand oder halbautomatisch erfolgen. Hierfür kann ein Dreharm an der Vorderseite des Monoblocks 1, 11, 21 vorgesehen sein, welcher um eine vertikale Achse drehbar angeordnet ist. Ein oder beide Enden des Dreharms sind zur Aufnahme jeweils eines Werkstückes ausgebildet und ragen je nach Drehstellung abwechselnd in den Aufnahmebereich der Spindeleinheit 5, 15, 25. Ein Arbeiter kann so das jeweils außerhalb der Werkzeugmaschine befindliche Ende des Dreharms bedienen, indem er ein bearbeitetes Werkstück entnimmt und das nächste zu bearbeitende Werkstück in den Dreharm einsetzt. Die Verdrehung des Dreharms kann manuell oder automatisch, insbesondere auf Knopfdruck erfolgen.

Wie man sieht, ermöglicht die erfindungsgemäße Werkzeugmaschine einen sehr guten Zugang zum Aufnahmebereich der Spindeleinheit 5, 15, 25 und damit eine einfache manuelle oder halbautomatische Bestückung. Der Arbeitsbereich der Werkzeugmaschine ist außerdem sehr gut einsehbar. Ebenso erkennt man, daß der Platzbedarf der erfindungsgemäßen Werkzeugmaschine durch den beschriebenen Aufbau sehr gering gehalten werden kann. Insbesondere kann eine Werkzeugmaschine für die Drehbearbeitung von Futterteilen mit einer Grundfläche von ca. 1,2 m x 1,5 m ohne Zusatzaggregate hergestellt werden. Mit Schaltschrank ergibt sich eine Grundfläche von ca. 1,6 m x 1,5 m.

Wie man in den Fig. 3, 4, 5 und 6 sieht, können erforderliche Zusatzaggregate wie Schaltschränke 31 an der Rückseite der Werkzeugmaschine angeordnet werden. Ebenso ist aber auch eine seitliche Anordnung möglich. Dies gilt in gleicher Weise für die Variante der Fig. 1 und 2.

Eine seitliche Anordnung der Schaltschränke 31 ist insbesondere dann vorteilhaft, wenn zwei erfindungsgemäße Werkzeugmaschinen Seite an Seite als Doppelbearbeitungszentrum angeordnet werden. In diesem Fall werden die Schaltschränke 31 auf den beiden einander abgewandten Seiten der beiden Maschinengestelle 1, 11, 21 angeordnet. Eine Anordnung der Schaltschränke 31 auf der Rückseite des Maschinengestells 1, 11, 21 ist insbesondere bei einer Reihenanordnung mehrerer erfindungsgemäßer Werkzeugmaschinen vorteilhaft. Bei einer solchen Anordnung werden mehrere erfindungsgemäße Werkzeugmaschinen unmittelbar, das heißt Seite an Seite, nebeneinander zur Bildung einer Bearbeitungskette angeordnet.

Zusätzlich zu dem geringen Platzbedarf jeder einzelnen Werkzeugmaschine wird dadurch der gesamte Platzbedarf der Verarbeitungskette weiter verringert. Jede der nebeneinander angeordneten Maschinen kann von vorne in derselben einfachen Weise bedient werden, wie dies zuvor beschrieben wurde. Ebenso sind alle Arbeitsbereiche der nebeneinander angeordneten Werkzeugmaschinen gut einsehbar. Damit ergibt sich eine besonders vorteilhafte und kostengünstige Möglichkeit einer Verkettung von Werkzeugmaschinen.

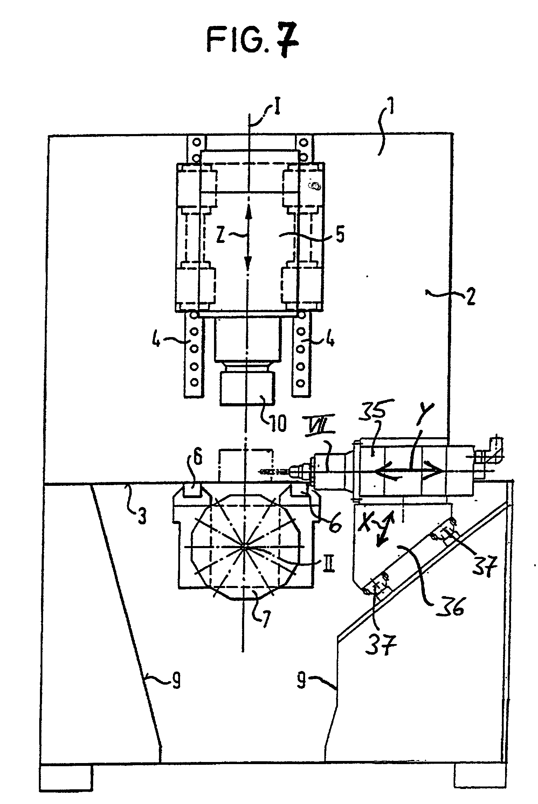

Bei der erfindungsgemäßen Werkzeugmaschine können auch zusätzliche Bearbeitungseinheiten vorgesehen sein. Bei der in Fig. 7 dargestellten Variante, die im übrigen der in den Fig. 1 und 2 dargestellten Variante entspricht, kann beispielsweise im Bereich einer Seitenwand 9 ein Bohrrevolver 35 vorgesehen sein, welcher seitlich zu der Spindeleinheit 5 und zum Werkzeugrevolver 7 versetzt auf einem Schlitten 36 angeordnet ist, der auf Schienen 37 in X-Richtung verfahrbar ist. Dabei ist der Bohrrevolver 35 auf dem Schlitten 36 in Y-Richtung verfahrbar befestigt und weist eine Bohrerdrehachse VII auf.

Mit dem Bohrrevolver 35 können Bohrungen in ein Werkstück eingebracht werden, welches von der Spindeleinheit 5 gehalten wird. Der für die Bohrung notwendige Vorschub wird durch Bewegung des Bohrrevolvers 35 gegenüber dem Schlitten 36 bewirkt. Durch Verfahren des Schlittens 36 auf den Schienen 37 kann die Position der eingebrachten Bohrung in gewünschter Weise gewählt werden. Alternativ könnte die Spindeleinheit 5 zusätzlich auf horizontalen Schienen in Y-Richtung verfahrbar ausgebildet sein, um einen Eingriff des Bohrrevolvers 35 mit dem Werkstück zu bewirken.

Als Bearbeitungseinheit können außerdem eine Entgrat- oder Anfasmaschine oder eine Induktivhärtemaschine vorgesehen sein. Auch in anderen Varianten kann die Spindeleinheit 5,15, 25 an der Vorderwand des Monoblocks 1, 11, 21 in einer weiteren, zu der ersten Achsrichtung bevorzugt senkrechten Achsrichtung hin und her beweglich sein. Als zusätzliche Einrichtungen können insbesondere auch ein Kühlmittelbehälter, ein Hydraulikaggregat sowie ein Kühlaggregat für die Motorspindel vorgesehen sein.

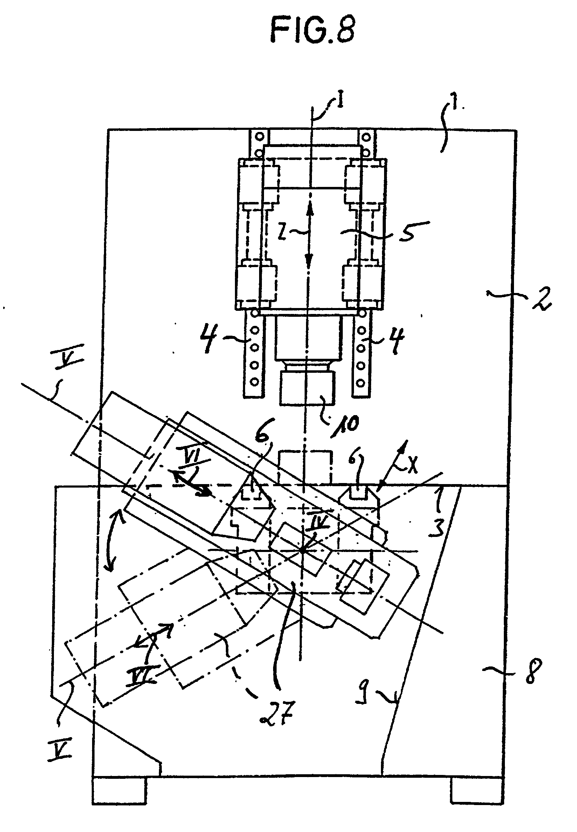

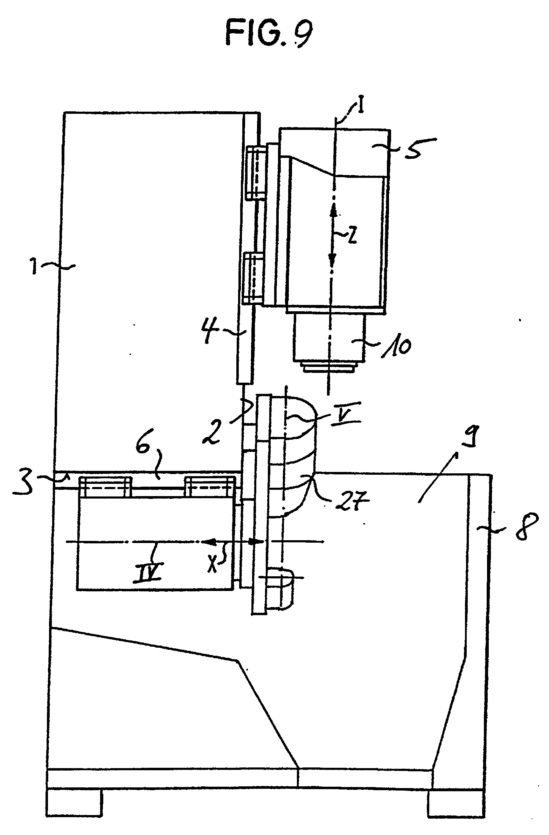

Bei der in den Figuren 8 und 9 dargestellten Variante der Erfindung handelt es sich wieder um eine Wälzfräseinrichtung. Im übrigen stimmt diese Variante mit der ersten Variante überein. Das heißt, das Maschinengestell ist als quaderförmiger Monoblock 1 ausgebildet mit einer vertikal verlaufenden Vorderwand 2 und einer horizontal verlaufenden unteren Wand 3. An der Vorderwand 2 des Monoblocks 1 sind vertikale Schienen 4 angeordnet, auf welchen eine Spindeleinheit 5 mit vertikaler Spindelachse I verschiebbar geführt ist. Die Spindeleinheit 5 ist dadurch in Z-Richtung hin- und herverschiebbar.

An der unteren Wand 3 des Monoblocks 1 sind ebenfalls Schienen 6 angeordnet, die unter einem rechten Winkel zu den Schienen 4 an der Vorderwand 2 des Monoblocks 1 und mit diesen fluchtend verlaufen. Auf den Schienen 6 ist nun eine Wälzfräseinheit 27 verschiebbar geführt, die dadurch in X-Richtung hin- und herbeweglich ist. Auf diese Weise ist ein von der Spindeleinheit 5 gehaltenes Werkstück mit der Wälzfräseinheit 27 zur Bearbeitung in Eingriff bringbar. Die Wälzfräseinheit 27 weist die üblichen Einstellmöglichkeiten und Achsen IV, V und VI auf. Die in den Figuren 8 und 9 dargestellte Werkzeugmaschine kann also zum Wälzfräsen von Zahnrädern oder zum Schlagwälzfräsen von konischen Verzahnungen eingesetzt werden.

Der Monoblock 1 wird von einem Untergestell 8 abgestützt, welches als separates Bauteil ausgebildet ist und zwei schräge Seitenwände 9 zur Späneführung aufweist. Die Spindeleinheit 5 umfaßt eine Aufnahme 10 für ein zu bearbeitendes Werkstück. Der zur Bearbeitung eines Werkstücks nötige Vorschub wird einerseits durch Verfahren der Spindeleinheit 5 in Z-Richtung und andererseits durch Verfahren der Wälzfräseinheit 27 in X-Richtung bewerkstelligt. Im übrigen gilt das zu den vorgenannten Varianten Gesagte auch hier, insbesondere hinsichtlich der Beladung und weiterer Aggregate.

### Bezugszeichenliste

- 1: Monoblock
- 2: Vorderwand
- 3: untere Wand
- 4: Schiene
- 5: Spindeleinheit
- 6: Schiene
- 7: Werkzeugrevolver
- 8: Untergestell
- 9: Seitenwand
- 10: Aufnahme
- 11: Monoblock
- 12: Vorderwand
- 13: Seitenwand
- 14: Schiene
- 15: Spindeleinheit
- 16: Schiene
- 17: Werkzeugrevolver
- 18: Untergestell
- 20: Aufnahme
- 21: Monoblock
- 22: Vorderwand
- 23: Seitenwand
- 24: Schiene
- 25: Spindeleinheit
- 26: Schiene
- 27: Wälzfräseinheit
- 28: Untergestell
- 30: Aufnahme
- 31: Schaltschrank
- 32: Spänetransporteinrichtung
- 33: Führungswand
- 34: Förderband
- 35: Bohrrevolver
- 36: Schlitten
- 37: Schiene

- I: vertikale Spindelachse
- II: Revolverachse
- III: horizontale Spindelachse
- IV: Schwenkachse von 27
- V: Drehachse von 27
- VI: Shiftachse von 27
- VII: Bohrerdrehachse

- X: Bewegungsachse
- Y: Bewegungsachse
- Z: Bewegungsachse

## Patentansprüche

1. Werkzeugmaschine zur Bearbeitung von Werkstücken, insbesondere Drehmaschine, mit einem Maschinengestell (1), einer an dem Maschinengestell (1) angeordneten Bearbeitungseinheit (7) und einem der Bearbeitungseinheit (7) zugeordneten Werkstückhalter (5) für ein zu bearbeitendes Werkstück, der am Maschinengestell (1) in zumindest einer Achsrichtung (Z) längs des Maschinengestells (1) hin und her beweglich angebracht ist, insbesondere Spindeleinheit mit vertikaler Spindelachse (I), wobei das Maschinengestell (1) mit einem Monoblock ausgebildet ist, welcher eine erste und eine zweite Außenwand (2, 3) umfasst, die unter einem Winkel von 90° zueinander verlaufen, und wobei der Werkstückhalter (5) am Monoblock (1) längs der ersten Wand (2) und die Bearbeitungseinheit (7) längs der zweiten Wand (3) derart hin und her beweglich angebracht sind, dass das von dem Werkstückhalter (5) gehaltene Werkstück und die Bearbeitungseinheit (7) zur Bearbeitung des Werkstücks miteinander in Eingriff bringbar sind, und die erste Außenwand (2), an welcher der Werkstückhalter (5) angeordnet ist, die Vorderseite des Monoblocks bildet,
**dadurch gekennzeichnet,**
**dass** die zweite Außenwand (3), an welcher die Bearbeitungseinheit (7) angeordnet ist, die Unterseite des Monoblocks bildet.

2. Werkzeugmaschine nach Anspruch 1,
**dadurch gekennzeichnet,**
**dass** die Vorderwand (2) des Maschinengestells (1) als vertikale Ebene ausgebildet ist.

3. Werkzeugmaschine nach Anspruch 1 oder 2,
**dadurch gekennzeichnet,**
**dass** die beiden Außenwände (2, 3) unmittelbar aneinander anschließen.

4. Werkzeugmaschine nach einem der vorhergehenden Ansprüche,
**dadurch gekennzeichnet,**
**dass** der Werkstückhalter (5) an der Vorderwand (2) des Monoblocks längs einer vertikalen Achse (Z) und die Bearbeitungseinheit (7) an der unteren Wand (3) des Monoblocks längs einer horizontalen Achse (X) beweglich ist.

5. Werkzeugmaschine nach einem der vorhergehenden Ansprüche,
**dadurch gekennzeichnet,**
**dass** der Monoblock auf einem separaten Untergestell (8) angeordnet ist.

6. Werkzeugmaschine nach einem der vorhergehenden Ansprüche,
**dadurch gekennzeichnet,**
**dass** der Werkstückhalter (5) und/oder die Bearbeitungseinheit (7) thermosymmetrisch am Monoblock angeordnet sind.

7. Werkzeugmaschine nach einem der vorhergehenden Ansprüche,
**dadurch gekennzeichnet,**
**dass** die Bearbeitungseinheit als Werkzeugrevolver (7, 17) ausgebildet ist.

8. Werkzeugmaschine nach einem der Ansprüche 1 bis 6,
**dadurch gekennzeichnet,**
**dass** die Bearbeitungseinheit als Wälzfräseinheit (27) ausgebildet ist.

9. Werkzeugmaschine nach einem der Ansprüche 1 bis 6,
**dadurch gekennzeichnet,**
**dass** die Bearbeitungseinheit als Entgrat- oder Anfasmaschine ausgebildet ist.

10. Werkzeugmaschine nach einem der Ansprüche 1 bis 6,
**dadurch gekennzeichnet,**
**dass** die Bearbeitungseinheit als Induktivhärtemaschine ausgebildet ist.

11. Werkzeugmaschine nach einem der vorhergehenden Ansprüche,
**dadurch gekennzeichnet,**
**dass** zusätzlich zur Bearbeitungseinheit (5) weitere Bearbeitungswerkzeuge (35) vorgesehen sind.

12. Werkzeugmaschine nach Anspruch 11,
**dadurch gekennzeichnet,**
**dass** zusätzlich ein seitlich zur Spindeleinheit (5) angeordneter Bohrrevolver (35) vorgesehen ist.

13. Werkzeugmaschine nach einem der vorhergehenden Ansprüche
dadurch ge kennzeichnet,
dass der Werkstückhalter längs der Vorderwand des Maschinengestells in zwei zueinander senkrechten Richtungen hin- und herbeweglich ist.

14. Werkzeugmaschine nach einem der vorhergehenden Ansprüche,
**dadurch gekennzeichnet,**
**dass** an der Vorderseite der Werkzeugmaschine ein Dreharm vorgesehen ist, der insbesondere zwei Enden aufweist, die zur Aufnahme eines Werkstückes ausgebildet sind und in den Aufnahmebereich des Werkstückhalters verdrehbar sind.

## Claims

1. A machine tool for the processing of workpieces, in particular a turning machine, comprising a machine frame (1), a processing unit (7) arranged at the machine frame (1) and a workpiece holder (5) for a workpiece to be processed being associated with the processing unit (7) and being attached to the machine frame (1) movably to and fro in at least one axis direction (Z) along the machine frame (1), in particular a spindle unit with a vertical spindle axis (I), wherein the machine frame (1) is formed with a monoblock which comprises a first and a second outer wall (2, 3) which extend towards one another at an angle of 90°, and wherein the workpiece holder (5) is attached to the monoblock (1) movably to and fro along the first wall (2) and the processing unit (7) is attached to the monoblock (1) movably to and fro along the second wall (3) such that the workpiece held by the workpiece holder (5) and the processing unit (7) can be brought into engagement with one another for the processing of the workpiece, and the first outer wall (2), at which the workpiece holder (5) is arranged, forms the front side of the monoblock,
**characterised in that**
the second outer wall (3), at which the processing unit (7) is arranged, forms the lower side of the monoblock.

2. A machine tool in accordance with claim 1, **characterised in that** the front wall (2) of the machine frame (1) is formed as a vertical plane.

3. A machine tool in accordance with claim 1 or claim 2, **characterised in that** the two outer walls (2, 3) directly adjoin one another.

4. A machine tool in accordance with any one of the preceding claims, **characterised in that** the workpiece holder (5) is movable at the front wall (2) of the monoblock along a vertical axis (Z) and the processing unit is movable at the lower wall (3) of the monoblock along a horizontal axis (X).

5. A machine tool in accordance with any one of the preceding claims, **characterised in that** the monoblock is arranged on a separate lower frame (8).

6. A machine tool in accordance with any one of the preceding claims, **characterised in that** the workpiece holder (5) and/or the processing unit (7) are arranged thermo-symmetrically at the monoblock.

7. A machine tool in accordance with any one of the preceding claims, **characterised in that** the processing unit is made as a tool revolver (7, 17).

8. A machine tool in accordance with any one of claims 1 to 6, **characterised in that** the processing unit is made as a generating cutter unit (27).

9. A machine tool in accordance with any one claims 1 to 6, **characterised in that** the processing unit is made as a deburring machine or as a chamfering machine.

10. A machine tool in accordance with any one of claims to 6, **characterised in that** the processing unit is made as an inductive hardening machine.

11. A machine tool in accordance with any one of the preceding claims, **characterised in that** further processing tools (35) are provided in addition to the processing unit (5).

12. A machine tool in accordance with claim 11, **characterised in that** a drill revolver (35) is provided arranged to the side of the spindle unit (5).

13. A machine tool in accordance with any one of the preceding claims, **characterised in that** the workpiece holder can be moved to and fro along the front wall of the machine frame in two directions perpendicular to one another.

14. A machine tool in accordance with any one of the preceding claims, **characterised in that** a rotary arm is provided at the front side of the machine tool and in particular has two ends which are made to receive a workpiece and which can be turned into the reception region of the workpiece holder.

## Revendications

1. Machine-outil pour usiner des pièces à oeuvrer, en particulier tour, comportant un bâti de machine (1), une unité d'usinage (7) agencée sur le bâti de machine (1) et un porte-pièce (5) associé à l'unité d'usinage (7) pour une pièce à usiner et agencé sur le bâti de machine (1) de façon mobile en va-et-vient dans au moins une direction axiale (Z) le long du bâti de machine (1), en particulier une unité à broche avec axe de broche vertical (I), le bâti de machine (1) étant réalisé par un élément monobloc qui comprend une première et une deuxièmes paroi extérieure (2, 3) qui s'étendent sous un angle de 90° l'une par rapport à l'autre, et le porte-pièce (5) étant agencé sur l'élément monobloc (1) de façon mobile en va-et-vient le long de la première paroi (2) et l'unité d'usinage (7) étant agencée mobile en va-et-vient le long de la deuxième paroi (3), de telle sorte que la pièce à oeuvrer portée par le porte-pièce (5) et l'unité d'usinage (7) sont susceptibles d'être amenées en engagement mutuel pour l'usinage de la pièce, et la première paroi extérieure (2) sur laquelle est agencé le porte-pièce (5) forme la face antérieure de l'élément monobloc, **caractérisée en ce que** la deuxième paroi extérieure (3) sur laquelle est agencée l'unité d'usinage (7) forme la face inférieure de l'élément monobloc.

2. Machine-outil selon la revendication 1, **caractérisée en ce que** la paroi antérieure (2) du bâti de machine (1) est réalisée sous forme de plan vertical.

3. Machine-outil selon l'une ou l'autre des revendications 1 et 2, **caractérisée en ce que** les deux parois extérieures (2, 3) se raccordent directement l'une à l'autre.

4. Machine-outil selon l'une des revendications précédentes, **caractérisée en ce que** le porte-pièce (5) sur la paroi antérieure (2) de l'élément monobloc est mobile le long d'un axe vertical (Z) et l'unité d'usinage (7) sur la paroi inférieure (3) de l'élément monobloc est mobile le long d'un axe horizontal (X).

5. Machine-outil selon l'une des revendications précédentes, **caractérisée en ce que** l'élément monobloc est agencé sur un bâti inférieur séparé (8).

6. Machine-outil selon l'une des revendications précédentes, **caractérisée en ce que** le porte-pièce (5) et/ou l'unité d'usinage (7) sont agencés de façon thermiquement symétrique sur l'élément monobloc.

7. Machine-outil selon l'une des revendications précédentes, **caractérisée en ce que** l'unité d'usinage est réalisée sous forme de barillet à outils (7, 17).

8. Machine-outil selon l'une des revendications 1 à 6, **caractérisée en ce que** l'unité d'usinage est réalisée sous forme d'unité à fraise-mère développante (27).

9. Machine-outil selon l'une des revendications 1 à 6, **caractérisée en ce que** l'unité d'usinage est réalisée sous forme de machine d'ébavurage ou de biseautage.

10. Machine-outil selon l'une des revendications 1 à 6, **caractérisée en ce que** l'unité d'usinage est réalisée sous forme de machine de trempe inductive.

11. Machine-outil selon l'une des revendications précédentes, **caractérisée en ce qu'**il est prévu, en supplément à l'unité d'usinage (5), d'autres outils d'usinage (35).

12. Machine-outil selon la revendication 11, **caractérisée en ce qu'**il est prévu en supplément un barillet de perçage (35) agencé latéralement par rapport à l'unité à broche (5).

13. Machine-outil selon l'une des revendications précédentes, **caractérisée en ce que** le porte-pièce est mobile en va-et-vient le long de la paroi antérieure du bâti de machine dans deux directions perpendiculaires l'une à l'autre.

14. Machine-outil selon l'une des revendications précédentes, **caractérisée en ce qu'**il est prévu sur la face antérieure de la machine-outil un bras rotatif qui comprend en particulier deux extrémités qui sont réalisées pour recevoir une pièce à oeuvrer et qui peuvent tourner jusque dans la zone de réception du porte-pièce.
